# EUROPEAN PATENT SPECIFICATION

(11) **EP 4 440 304 B1**
(45) Date of publication and mention of the grant of the patent: **31.12.2025**
(21) Application number: 22821635.4
(22) Date of filing: 30.11.2022
(51) Int. Cl.: B05B 12/12, B05B 9/00, B05B 1/20, B05B 12/04, B05B 12/14, A01M 7/00

(54) **AGRICULTURAL SYSTEM FOR LOW AND HIGH-RESOLUTION SPOT SPRAYING AND METHOD FOR OPERATING SUCH A SYSTEM**
LANDWIRTSCHAFTLICHES SYSTEM ZUM HOCH- UND TIEFAUFGELÖSTEN SPOTSPRITZEN UND VERFAHREN ZUM BETREIBEN EINES SOLCHEN SYSTEMS
SYSTÈME AGRICOLE POUR PULVÉRISATION LOCALISÉE À BASSE ET HAUTE RÉSOLUTION ET PROCÉDÉ DE FONCTIONNEMENT D'UN TEL SYSTÈME

(30) Priority: 02.12.2021 CH 0706852021; 24.03.2022 CH 3212022
(43) Date of publication of application: 09.10.2024
(73) Proprietor: EcoRobotix SA, 1400 Yverdon-les-Bains (CH)
(72) Inventor: TANNER, Steve, 1435 Essert-Pittet (CH)
(74) Representative: P&TS SA (AG, Ltd.)
(86) International application number: PCT/IB2022/061597
(87) International publication number: WO 2023/100102

(56) References cited:
- EP-A1- 3 469 905
- WO-A1-2019/105651
- WO-A1-2020/157702
- DE-A1- 102007 008 786
- DE-A1- 102018 221 468
- DE-A1- 102019 203 394
- US-B1- 6 206 406

## Description

### Field of the invention

The present invention concerns the field of agriculture plant treatment and more particularly an agricultural system for low and high-resolution spot spaying. The present invention also concerns a method of operating the agricultural system for multiple spraying modes of agrochemicals.

### Description of related art

In conventional agricultural spraying systems, the nozzles are placed on a spray bar aligned orthogonally to the direction of displacement of the vehicle on which it is mounted, and parallel to the surface to be sprayed. The nozzles are aligned on the spray bar, and usually separated to each other by a uniform distance. Their divergent jet allows to apply the liquid on a given surface, which depends on the distance from nozzle to the target, usually the height distance from nozzle to the ground or plants. A conventional spray application is applied as homogeneously as possible on the complete surface under the spray bar, such application being called "full" application in the following description.

Recently, so-called smart sprayers have appeared on the market. They include cameras forward-looking fixed along the spray bar and processing units configured to process images captured by the cameras to recognize the presence of specific plants in front of the spray bar. The nozzles comprise electro valves which are switched on when a plant to be sprayed passes under the corresponding nozzle. DE 10 2019 203394 A1 and WO 2020/157702 A1 disclose examples of such sprayers. The spatial precision and size of the corresponding spot sprays is limited due to the nozzle-to-nozzle distance of a conventional spray bar, and the limited plant mapping precision allowed by the camera system. These smart sprayers have therefore the inconvenient to use large amount of herbicide which are applied indiscriminately on the plants to be treated and to their surroundings which do not need any treatment, thereby wasting a significant amount of herbicide.

There is therefore a need for more precise spot spray applications to reduce the agrochemicals usage. In order to be more precise in spraying, the spray spot size must be smaller, and must be localized with greater accuracy. A smaller spray spot is obtained with a higher nozzle density along the bar, and more narrow spray angles. However, the minimal angle is usually limited due to the need for the nozzle to produce droplets at a correct size. Small jet divergence angles have the tendency to produce too big droplets. Therefore, the only way to reduce the spray spot is to reduce the distance from nozzle to target, usually near the ground. In order to position the activation of the spot spray with greater accuracy, the object to be sprayed must first be mapped accurately in the coordinate system of the sprayer, and then its displacement must be tracked with accuracy so that the nozzle are activated at the right moment and right place.

In a conventional agricultural sprayer equipped with a single spray bar, spanning horizontally on a distance of several tenths of meters, the regulation of the distance of the spray bar to the ground is done actively by a regulation system. This system comprises distance sensors mounted along the spray bar for measuring the vertical distance of the spray bar to ground, and actuators configured to move the spray bar according to the output sensors, usually with a rotation around an axis parallel to the displacement (roll movement) and vertical translation. There exist some more sophisticated regulation schemes, for instance for each half spray bar, but reducing the nozzle to ground distance on a large sprayer is very difficult, as the spray bar height control system of sprayers has limited dynamical capability to follow the ground surface in the presence of shocks in the wheels of the vehicle, caused by bumps or holes in the terrain. Then, controlling a constant distance along the complete spray ramp in the presence of uneven field is very challenging. Finally, the inertial behaviour of a wide spray ramp makes it prone to collision with ground with short nozzle to ground distance.

Reducing the nozzle-to-nozzle distance to improve spray precision has another negative aspect: the flow of each nozzle needs to be reduced accordingly to keep the same applied dose per unit area. Low-capacity nozzles are then not ideal for full applications, and therefore the sprayer capability to perform full spray application, such as application of liquid fertilizer, or fungicide, is reduced. The smart sprayer loses its "universal" usage and two different sprayers are then required: one for full application, where spatial precision is not a concern, and one for spot spray application with the maximal precision in the spot spray operations.

To reach high spraying precision, a critical operation is to localize the objects to be sprayed with high accuracy. This localization is usually done with an image sensor fixed on the spray bar, which is accurately geo-referenced on it, usually by means of a geometric calibration, so that any detected object is correctly mapped and its relative displacement in the rear direction can be tracked until it is sprayed. However, in most sprayers, the cameras are tilted so as to look forward, which allows a detection sufficiently early to leave enough time for the image processing to be done. Unfortunately, tilting the camera in the horizontal direction results in poor object mapping due to the absence of distance measurement with a standard image sensor. The distance must be approximated, resulting in important errors. Furthermore, any ground irregularity translates directly into positioning errors. Finally, badly estimated object to camera distance causes also scaling errors in any visual odometry algorithm used to track the relative movement of the sprayer equipment with ground.

### Brief summary of the invention

An aim of the present invention is therefore to provide an agricultural system for high-resolution spot spraying adapted to detect very small plants, and to perform accurate plant/object mapping and tracking.

Another aim of the present invention is to provide an agricultural system adapted to perform full application of liquid, for instance fertilizer or fungicide, and high-resolution spot spraying application, for instance of non-selective herbicide for selective weeding operation, or insecticide on the crop plants only.

These aims are achieved, notably by an agricultural system for spraying an area of a cultivated field, including a spraying equipment. The spraying equipment comprise a first and a second spray bar, a first and a second spray bar height control system, a camera system, a processing unit, one or more object tracking units, and a first and a second nozzles array control unit. The first and second spray bar extend perpendicularly to the travel direction of the agricultural system when operating. The first spray bar comprises a first array of nozzles separated from each other by a first distance while the second spray bar comprises a second array of nozzles separated from each other by a second distance smaller than said first distance such that the spatial resolution of spot sprays that may be sprayed by the second array of nozzles is higher than the spatial resolution of spot sprays that may be sprayed by the first array of nozzles when the first and second spray bars are at the same height such that the first and second arrays of nozzles may perform respectively low and high-resolution spot spraying. The first and second spray bar height control system comprise each at least one height actuator so as to control independently the height of the first and second spray bars with reference to the ground. The camera system comprises one or more camera modules having each a camera arranged to capture images of objects, for example plants and/or part of plants, and of the ground, ahead of the first and second spray bars. in the travel direction of the agricultural system. The processing unit is configured to run an image recognition software to identify said objects on the acquired images and to generate a mapping of these objects on the coordinate system of the spray bars. The or each object tracking unit is configured to continuously track the position of these objects on said mapping. The first and second nozzles array control unit are configured to control each nozzle of respective first and second array of nozzles as to selectively control the nozzles of the first and second arrays of nozzles to perform low and/or high-resolution spot spraying on different objects as a function of the position of these objects on said mapping.

In an embodiment, the spray bar height control system comprises one or more primary height actuators arranged to control the height of both first and second spray bars with reference to the ground and one or more secondary height actuators arranged to move one of said first and second spray bars relative to the other of said first and second spray bars.

In an embodiment, the spraying equipment further comprises distance measurement sensors arranged to measure the distance from the first and/or the second spray bar to the ground surface to determine an estimated object plane. The distance measurement sensors are for example mounted along the first and second spray bars. The distance measurement sensors are arranged to send distance information to the first and a second nozzles array control unit to regulate the height of said first and second spray bars as a function of said distance information.

In an embodiment, the camera module or each camera module further comprises a 3D depth sensor arranged to measure the distance between any point of the objects acquired by the camera and said 3D depth sensor to generate a depth map on which is mapped said objects in the tri-dimensional coordinate system of the first and second spray bars, for correction of any horizontal mapping errors caused by the height difference between said estimated object plane and the real object positions to improve the spraying accuracy.

In an embodiment, the 3D depth sensor is a laser scanning system with time of flight (LIDAR) or triangulation, a stereovision system, a time-of-flight camera, or a structured light depth camera.

In an embodiment, the camera module or each camera module comprises at least two cameras arranged to acquire simultaneously respectively a fist and a second set of images of the ground ahead of the first and second spray bars, and a stereovision computing unit configured to compute the depth map of the objects as a function of said first and second sets of images.

In an embodiment, the spraying equipment includes a first and a second fluid distribution systems arranged to provide to respective first and second arrays of nozzles a different chemical mixture at a possibly different pressure, so as to enable the spraying equipment to spray two different chemical preparations in a single passage, for example simultaneously. Each chemical preparation includes for example herbicide, fungicide, insecticide, fertilizer or nematocide.

In an embodiment, the first spray bar comprising the first array of nozzles is adapted to be extended laterally, either by translation or by unfolding of one or several first spray bar extensions. These bar extensions are equipped with the low-resolution nozzle array and with range measurement sensors, so as to provide a larger working width for full spray application to achieve continuous and homogeneous spray application without low and high-resolution spot spraying.

In an embodiment, the camera module or each camera module is rotatably mounted on a support of the spraying equipment, for example on the first spray bar, to provide varying tilt angle of the optical axis of the camera of the camera module or each camera module with reference to the ground to modify the distance between an edge of the captured images of an area of a cultivated field by the camera and the projection on the ground of said first and second spray bars.

In an embodiment, the camera module or each camera module is mounted on a mast extending forward from said first and second spray bars. The mast comprises a motorized rotation system for controlled, accurate and repeatable rotation of the mast around an axis extending perpendicularly to the travel direction of the agricultural system and allowing multiple positions between two extreme positions, thus offering varying tilt angle for the camera module.

Another aspect of the invention relates to a method of operating the agricultural system using visual odometry to detect and track the tri-dimensional movement of said objects in the tri-dimensional coordinate system of the first and second spray bars such that the first and second nozzles array control units timely control said first and second array of nozzles according to the position of said objects in said 3D coordinate system. The visual odometry comprises the steps of: i. capturing with the camera a first image of the ground and of the objects on the ground; ii. simultaneously capturing with a 3D depth sensor a depth map of the ground and the objects captured in the first image; iii. merging the first image with the depth map to obtain a 3D image; iv. extracting on said 3D image a set of features, such as contour of an object, for features tracking; v. repeating steps i to iv and tracking the movement of the extracted features between two consecutive 3D images as the agricultural system moves along its travel direction to compute the movement of said extracted features in said 3D coordinate system.

In an embodiment, the optical axis of the camera of the camera module or each camera module is tilted around its rotation axis to set a first distance and a second distance smaller than the first distance. The distance is the distance between an edge of the captured image of an area of a cultivated field and the projection on the ground of said first and second spray bars. The optical axis is adjusted to set the first distance when only low-resolution spot spraying is used, thereby increasing the time for computation and consequently to allow speed increase of the agricultural system. The optical axis is adjusted to set the second distance when only high-resolution spot spraying is used, wherein the speed of the agricultural system is limited to allow high-precision mapping of the plants in the ground reference.

In an embodiment, the camera module or each camera module includes a first camera sensitive to a first set of spectral bands, a second camera sensitive to a second set of spectral bands, a 3D optical depth sensor sensitive to a third set of spectral bands, and one or more irradiation elements. The spectral band emission of said one or more irradiation elements, combined together, covers the entire spectral bands of the first camera, the second camera and the 3D depth sensor. Each irradiance element is turned on only when the pixels of the cameras or the 3D depth sensor are integrating light using the corresponding spectrum.

Another aim of the invention is to provide a precise and fast stabilization of the high resoution nozzle array to ground distance in uneven terrains. This is achieved by having two independent active height control systems for each one of the high and low resolution nozzle arrays. The first nozzle array (low resolution) being fixed directly on the first spray bar structure, its distance to ground is set by a first regulator controlling the stability of the first spray bar by means of a first set of actuators, generally controlling the roll angle and the vertical position of the bar. As the distance to ground of this first nozzle array is significant, a very accurate regulation is not needed, and the impact of the terrain irregularities on the spray accuracy do not degrade significantly the precisions of this low resolution spot spray. However, this is different with the second (high resolution) nozzle array, which must be placed and maintained much closer to ground in order to guarantee high spot spray accuracy. This is achieved by means of two elements. The first is to split this high resolution nozzle array into smaller segments, each typically of a few meters long, and each having its own active height control system, so that even in the presence of uneven terrain, the high resolution nozzles follow the surface profile. The second is to pilot independently these height controllers by the information provided by the 3D depth sensors located in front of the corresponding segment. Additional height information provided by the height sensors regulating the first spray bar can also be used.

Another aim of the invention is to take into account the mechanical coupling existing between the two position-regulated spray bars for the active control of the bars. Indeed, if such a coupling would not be taken into account, any vertical movement of the individual segments of the second spray bar resulting into a force applied to the first spray bar, would inject a perturbation in its height control. However, this perturbation is known, as it is generated by the output of the height controller of each second spray bar segment. Therefore, this knowledge can be used to compensate said perturbation in the controller method of the first spray bar height controller. Conversely, any regulation movement of the first spray bar will translate into a perturbation in the position of each segment of the second spray bar. This perturbation being known, it can be compensated in the controller method of each segment of the second spray bar. This mutually mechanically-coupled system can be described mathematically and the regulation methods of each spray bar height controller can be designed accordingly.

In an embodiment, the second array of nozzles comprises several segments comprising each a series of nozzle. The second spray bar height control system comprises one actuator per segment to allow fine control of the nozzles-to-ground distance of each segment independently from the others.

In an embodiment, the first spray bar height control system regulates the distance between the first spray bar and the ground as a function of a combination of the information provided by distance measurement sensors, by 3D depth sensors, and by the second spray bar height control system, in particular the position, speed and/or acceleration information of the second spray bar and/or each of several segments of said the second spray bar.

In an embodiment, the second spray bar height control system regulates the distance between the second spray bar and/or each of several segments of said the second spray bar with the ground as a function of a combination of the information provided by distance measurement sensors, by 3D depth sensors, and by the first spray bar height control system, in particular the position, speed and/or acceleration information of the first spray bar.

In an embodiment, the first and second arrays of nozzles are supplied either by a same liquid distribution system, or by their respective liquid distribution systems. The first and second control units are operated to control each nozzle of respective first and second arrays of nozzles to perform on the cultivated field any of the following operations: a. performing low-resolution and high-resolution spot spraying simultaneously; b. performing low-resolution spot spraying while high-resolution spot spraying is not performed; c. performing high-resolution spot spraying while the low-resolution spot spraying is not performed; d. performing a continuous and homogeneous spray application with the first array of nozzles while the second array of nozzles is not used; e. performing a continuous and homogeneous spray application with the second array of nozzles while the first array of nozzles is not used; f. performing a continuous and homogeneous spray application with the first array of nozzles while the second array of nozzles performs high-resolution spot spraying; g. performing a continuous and homogeneous spray application with the second array of nozzles while the first array of nozzles performs low-resolution spot spraying, and h. performing a continuous and homogeneous spray application with the first and second arrays of nozzles

### Brief Description of the Drawings

The invention will be better understood with the aid of the description of embodiment given by way of examples and illustrated by the figures, in which:
- Figure 1 shows a schematic lateral view of an agricultural system comprising a spraying equipment according to an embodiment;
- Figure 2 shows a schematic perspective view of a portion of the agricultural spraying equipment of Figure 1;
- Figure 3 shows a schematic lateral view of the first and second spray bars with the high- and low-resolution nozzle arrays, the camera module and associated systems to process the images and control the spraying equipment according to an embodiment;
- Figure 4 shows a schematic diagram of the elements associated to one camera module of the spraying equipment according to an embodiment;
- Figure 5a shows a schematic front view of one camera with the various mapping errors due to projection occurring without range sensor;
- Figure 5b shows a similar view of Figure 5a with exact mapping when a 3D range sensor is used, according to an embodiment;
- Figure 6 shows a schematic rear view of the spraying equipment in a folded configuration, according to an embodiment;
- Figure 7 shows the spraying equipment of Figure 6 in a deployed configuration,
- Figure 8a shows a schematic lateral view of the spray bar with the high-and low-resolution nozzle arrays, when the camera module is oriented to maximize the speed of the spraying equipment, and
- Figure 8b shows a similar view when the camera module is oriented to maximize the spray precision.

### Detailed description of possible embodiment of the invention

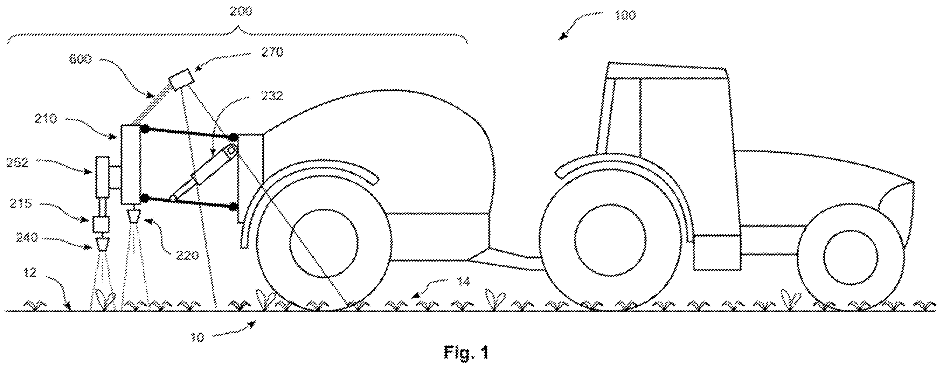

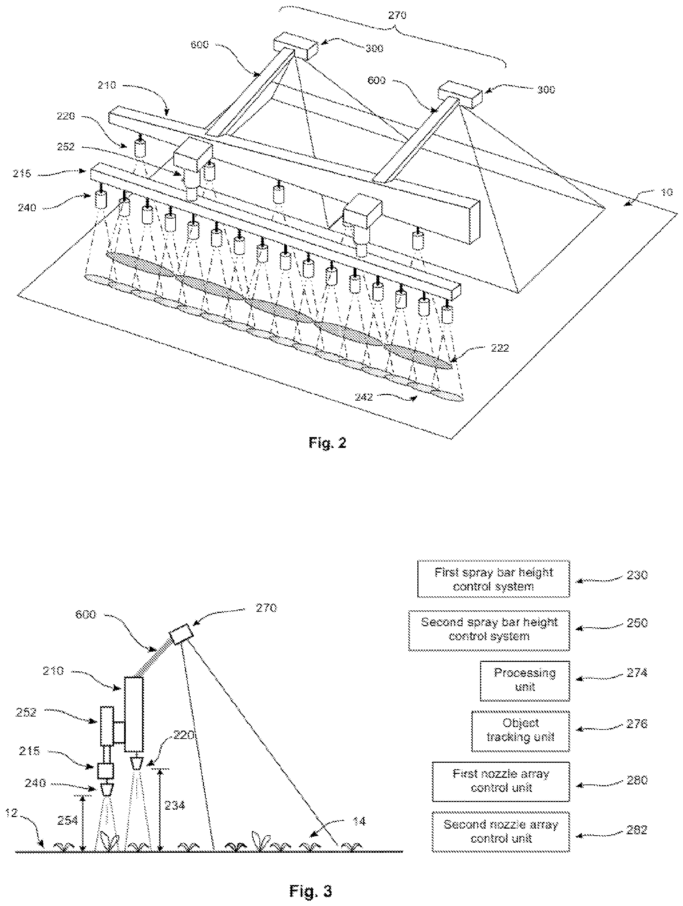

With reference to Figures 1 and 2, the agricultural system 100 comprises an agricultural spraying equipment 200 that may comprise a first and a second spray bar 210, 215 extending substantially perpendicularly to the travel direction of the agricultural system 100 when operating. The first spray bar 210 comprises a first array of nozzles 220 separated from each other by a first distance while the second spray bar 215 comprises a second array of nozzles 240 separated from each other by a second distance smaller than said first distance. As a result, the spatial resolution of spot sprays 242 that may be sprayed by the second array of nozzles 240 is higher than the spatial resolution of spot sprays 222 that may be sprayed by the first array of nozzles 220 when the first and second spray bars 210, 215 are at the same height. Accordingly, the first and second arrays of nozzles 220, 240 may advantageously perform respectively low and high-resolution spot spraying 222, 242.

Referring to Figure 3, the agricultural spraying equipment 200 also comprises a first spray bar height control system 230 comprising at least one height actuator 232 (Figure 1), and a second spray bar height control system 250 comprising at least one height actuator 252 so as to control independently the height of the first and second spray bars 210, 215 with reference to the ground 12. As shown in Figure 1, the height from the ground 12 of the first spray bar 210 may be controlled for example by means of height and roll actuators. At the rear of the first spray bar 210 are mounted height actuators 252 supporting the second spray bar 215 with the high-resolution nozzle array 240 so as to allow a different distance between the nozzles of this array and the ground on one side, and between the low-resolution nozzle array and the ground on the other side.

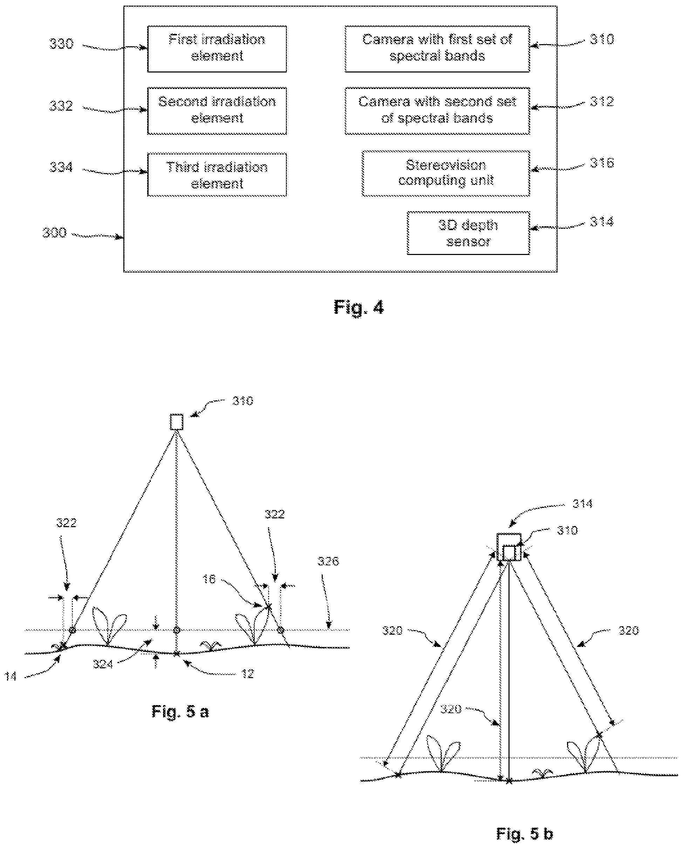

With reference to Figure 2, the agricultural spaying equipment further comprises a camera system 270 with one or more camera modules 300. Each camera module 300 comprises at least one a camera 310 (Figure 4) arranged to capture images of objects, for example plants 14 and/or part of plants 16, and of the ground 12, ahead of the first and second spray bars 210, 215 in the travel direction of the agricultural system 100. Advantageously, each camera module 300 may comprise other cameras, sensors and light sources as described subsequently with reference to Figure 4 to acquire images of high quality independently of the light conditions. Each camera module 300 is mounted at the end of a camera mast 600 and looking forward as shown in Figure 2.

Referring to Figure 3, the agricultural spraying equipment comprises a processing unit 274 configured to run an image recognition software to identify the objects on the acquired images and to generate a depth map of these objects on the 3D coordinate system of the spray bars. The spraying equipment further comprises one or more object tracking units 276 and a first and a second nozzles array control unit 280, 282. The tracking unit or each tracking unit 276 is configured to continuously track the position of these objects on the depth map. The first and second nozzles array control units 280, 282 are configured to control each nozzle of respective first and second arrays of nozzles 220, 240 as to selectively control the nozzles of the first and second arrays of nozzles 220, 240 to perform low and/or high-resolution spot spraying 222, 242 on different objects as a function of the position of these objects on the depth map with respect to the position of the first and second spray bars 210, 215.

The first spray bar height control system 230 is configured to receive height information from a 3D depth sensor 314 of the camera modules 300 and from other distance measurement sensors placed along the first spray bar 210 to measure its distance from the ground 12, and to compute orders for the spray bar height and roll actuators 232 in order to maintain the low resolution nozzle array at a constant distance 234 from ground. The high-resolution nozzle array height control system 250 performs the same function but on the high-resolution nozzle array to maintain a constant distance 254 with ground. The sensor processing unit 274 is configured to perform object detection and to transmit their coordinates to the object tracking unit 276 which tracks their relative displacement until they reach the nozzles. The first and second nozzles array control units 280, 282 transform a plant presence passing under the nozzles into opening and closing orders for the nozzles.

With reference to Figure 4, data of the 3D depth sensor 314 of the camera module 300 is sent to the processing unit which generates the depth map of the ground and its objects. The camera module 300 may comprise a second camera 312 with a second set of spectral bands 312, for instance in the infrared. In another embodiment, two cameras are used to simultaneously acquire the same images from two distinct positions and to calculate the depth map using a stereovision algorithm 316.

In an advantageous embodiment, the camera module 300 further comprises irradiation elements 330, 332, 334, whose respective spectral emission band covers at least all the bands of the cameras and 3D optical depth sensor. These irradiation elements provide very powerful light levels to allow the cameras to acquire images with a short exposure time to avoid image blur when the agricultural system 100 travels at high speed. In order to save power consumption, the irradiation elements are configured to emit only during the exposure times of the cameras. The rest of the time, they are inactive.

The advantages of the 3D depth sensor 314 on the spray precision are illustrated in Figures 5a and 5b. With a standard camera 310, in Figure 5a, the difference of vertical distance from camera to a supposed object plane 326 and camera to the real objects 12, 14, 16 results in wrongly mapped objects in longitudinal 322, lateral and vertical 324 directions. These errors degrade the object mapping and the visual odometry when this latter is used. To avoid these projection errors, using a 3D range sensor 314, as shown in Figure 5a, whose optical axis is located as much as possible near the camera optical axis, allows to obtain the exact distance 320 between a point in the image and the camera. Knowing this distance allows to compute the correct longitudinal, lateral and vertical object mapping from the camera image.

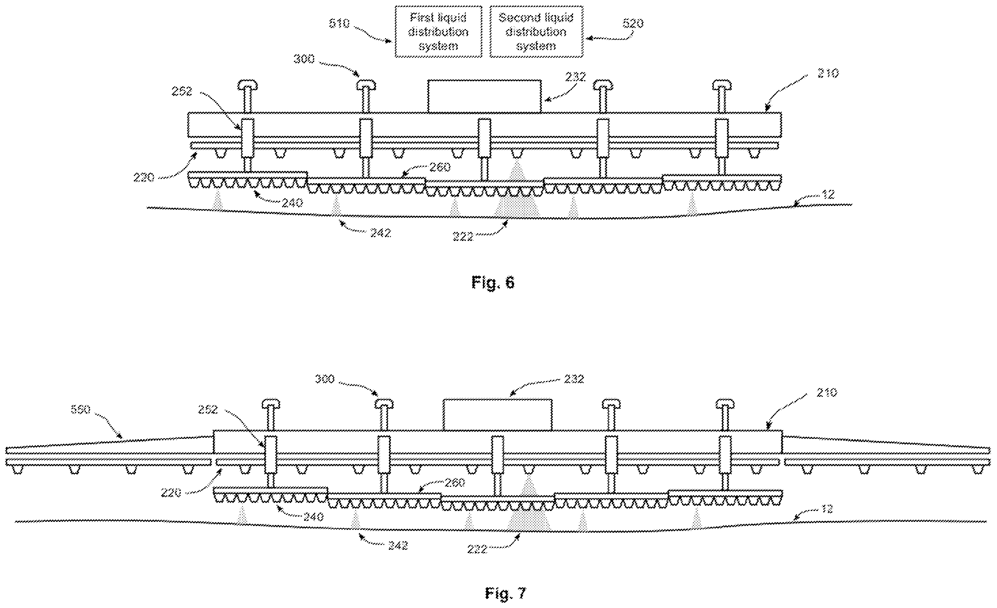

The best spot spray accuracy is obtained with short nozzle to ground distance. Keeping constant and short distance from nozzle to ground on a spray bar of several tenths of meter is challenging. One embodiment of the invention is to decompose the high-resolution nozzle array 240 into smaller segments 260, each one being mounted on individual height actuators 262 to allow fast regulation capability. The corresponding system is shown in Figure 6, where an uneven terrain 12 is sprayed with high spatial resolution spot sprays 242 and the height of each segment 260 with ground is independently adapted to obtain as constant spray distance as possible.

The same figure represents another embodiment of the invention, which is to include two liquid distribution systems with their own mixture and pressure. The first supplies the low-resolution nozzle array, which can be either operate in full application mode or in low resolution spot spray mode. The second supplies the high-resolution nozzle array.

Another aspect of the invention is to provide a higher throughput in full application mode with the same spraying equipment. The proposed innovation is to add extension segments at the extremities of the spray bar, as shown in Figure 7, supporting the low-resolution nozzle array only, and not being equipped with camera modules. By unfolding these segments, the spraying equipment can perform full application with an improved throughput.

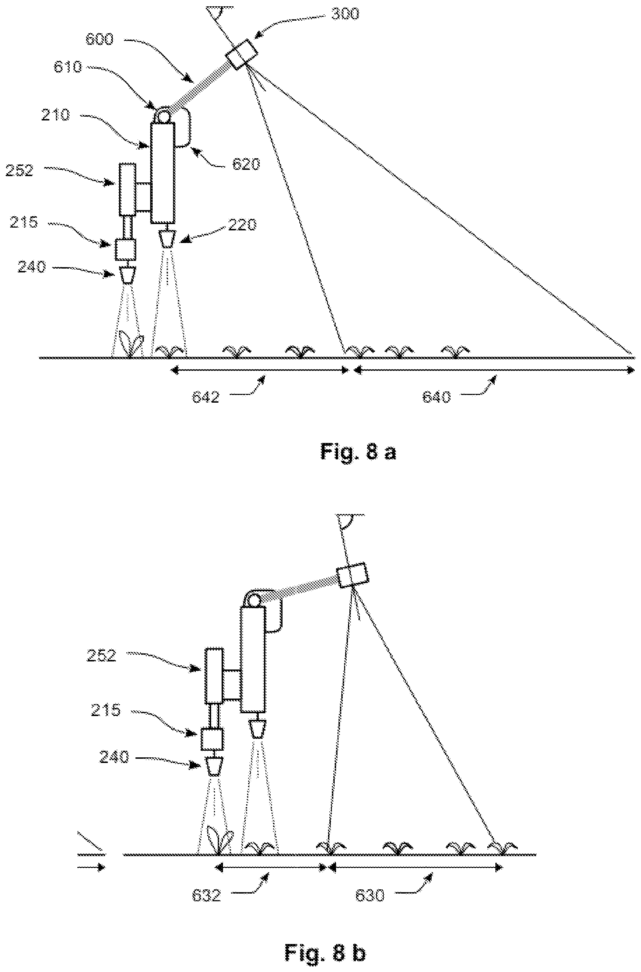

Another aspect of the invention is to provide varying tilt angles of the cameras depending on the desired speed of and accuracy of the chemical application. More particularly, the camera modules 300 are placed on the extremity of a corresponding mast 600 as illustrated in Figures 8a, 8b. Each mast 600 is mounted on a motorized rotation system 620 to pivot about an axis extending along the first spray bar 210.

When the mast is rotated to extend along a vertical direction (not shown), the first spray bar can be folded by segments without issue regarding collision of the masts with other parts. Figure 8a shows a first scenario where the tilt angle of the mast 600 is set such that the field of view 640 of the camera of the camera module 300 is directed to a first position at a first distance 642 to the first spray bar 210 in forward direction of the agricultural system resulting in an important distance between the rear side of the field of view and the nozzles. This case is desired when fast operation is needed, because this extended distance allows more time for the image processing, which is very often the bottleneck of such systems in terms of speed.

By setting the tilt angle of the mast as shown in Figure 8b, the field of view 630 is directed to a second position at a second distance 632 to the first spray bar 210 shorter than the first distance 642. The optical axis of the camera being almost vertical in this configuration, the quality of object mapping is better with an increased precision, at the cost of a reduced possible operation speed of the agricultural system due to a shorter distance between the rear side of field of view and the nozzles.

Another aspect of the invention relates to a method of operating the agricultural system 100 using visual odometry to detect and track the tri-dimensional movement of objects in the tri-dimensional coordinate system of the first and second array of nozzles 220, 240 such that the first and second nozzles array control units 280, 282 timely control the first and second array of nozzles 220, 240 according to the position of these objects in the above 3D coordinate system.

The visual odometry according to this method comprises the steps of: i. capturing with the camera 310 a first image of the ground 12 and the objects on the ground; ii. simultaneously capturing with a 3D depth sensor 314 a depth map of the ground and the objects captured in the first image; iii. merging the first image with the depth map to obtain a 3D image; iv. extracting on the 3D image a set of features, such as contour of an object, for features tracking, and v. repeating steps i to iv and tracking the movement of the extracted features between two consecutive 3D images as the agricultural system 100 moves along its travel direction to compute the movement of the extracted features in the 3D coordinate system of the first and second arrays of nozzles 220, 240.

Another aspect of the invention relates to a method of operating the agricultural system 100 of Figure 1 to perform different spraying operations on the cultivated field 10. The first and the second array of nozzles 220, 240 are supplied either by a same liquid distribution system, or by their respective liquid distribution systems 510, 520 as shown in Figure 6. The first and second control units 280, 282 are operated to control each nozzle of respective first and second array of nozzles 220, 240 to perform in the cultivated field any of the following operations: a. performing low-resolution and high-resolution spot sprays 222, 242 simultaneously; b. performing low-resolution spot spray 222 while high-resolution spot sprays 242 is not performed; c. performing high-resolution spot spray 242 while the low-resolution spot sprays 242 is not performed; d. performing a continuous and homogeneous spray application with the first array of nozzles 220 while the second array of nozzles 240 is not used; e. performing a continuous and homogeneous spray application with the second array of nozzles 240 while the first array of nozzles 220 is not used; f. performing a continuous and homogeneous spray application with the first array of nozzles 220 while the second array of nozzles 240 performs high-resolution spot spray 242; g. performing a continuous and homogeneous spray application with the second array of nozzles 240 while the first array of nozzles 220 performs low-resolution spot spray 222, and h. performing a continuous and homogeneous spray application with the first and second arrays of nozzles 220, 240.

## Claims

1. Agricultural system (100) for spraying an area of a cultivated field (10), including a spraying equipment (200), the spraying equipment comprising:
a first and a second spray bar (210, 215) extending perpendicularly to the travel direction of the agricultural system (100) when operating, wherein the first spray bar (210) comprises a first array of nozzles (220) separated from each other by a first distance while the second spray bar (215) comprises a second array of nozzles (240) separated from each other by a second distance smaller than said first distance such that the spatial resolution of spot sprays (242) that may be sprayed by the second array of nozzles (240) is higher than the spatial resolution of spot sprays (222) that may be sprayed by the first array of nozzles (220) when the first and second spray bars (210, 215) are at the same height such that the first and second arrays of nozzles (220, 240) may perform respectively low and high-resolution spot spraying (222, 242);
a first spray bar height control system (230) comprising at least one height actuator (232), and a second spray bar height control system (250) comprising at least one height actuator (252) so as to control independently the height of the first and second spray bars (210, 215) with reference to the ground (12);
a camera system (270) comprising one or more camera modules (300) comprising a camera (310) arranged to capture images of objects, for example plants (14) and/or part of plants (16), and of the ground (12), ahead of the first and second spray bars (210, 215) in the travel direction of the agricultural system (100);
a processing unit (274) configured to run an image recognition software to identify said objects on the acquired images and to generate a mapping of these objects on the coordinate system of the spray bars,
one or more object tracking units (276) configured to continuously track the position of these objects on said mapping,
a first and a second nozzles array control unit (280, 282) configured to control each nozzle of respective first and second array of nozzles (220, 240) as to selectively control the nozzles of said first and second arrays of nozzles (220, 240) to perform low and/or high-resolution spot spraying (222, 242) on different objects as a function of the position of these objects on said mapping with respect to the position of the first and second spray bars (210, 215).

2. The agricultural system (100) of claim 1, wherein the spray bar height control system (230) comprises one or more primary height actuators (232) arranged to control the height of both first and second spray bars (210, 215) with reference to the ground (12) and one or more secondary height actuators (252) arranged to move one of said first and second spray bars (210, 215) relative to the other of said first and second spray bars (210, 215).

3. The agricultural system (100) of the preceding claim, wherein the spraying equipment (200) comprises distance measurement sensors (290) arranged to measure the distance from the first and/or the second spray bar (210, 215) to the ground surface (12) to determine an estimated object plane (326), said distance measurement sensors (290) being for example mounted along the first and second spray bars (210, 215), and wherein said distance measurement sensors (290) are arranged to send distance information to the first and a second nozzles array control unit (280, 282) to regulate the height of said first and second spray bars (210, 215) to ground as a function of said distance information.

4. The agricultural system (100) of the preceding claim, wherein the camera module or each camera module (300) further comprises a 3D depth sensor (314) arranged to measure the distance (320) between any point of the objects acquired by the camera (310) and said 3D depth sensor (314) to generate a depth map on which is mapped said objects in the tri-dimensional coordinate system of the first and second spray bars (210, 215), for correction of any horizontal mapping errors (322) caused by the height difference (324) between said estimated object plane (326) and the real object positions to improve the spraying accuracy.

5. The agricultural system (100) of the preceding claim, wherein said 3D depth sensor (314) is a laser scanning system with time of flight (LIDAR) or triangulation, a stereovision system, a time-of-flight camera, or a structured light depth camera.

6. The agricultural system (100) of claim 4, wherein the camera module or each camera module (300) comprises at least two cameras arranged to acquire simultaneously respectively a fist and a second set of images of the ground (12) ahead of the first and second spray bars (210, 215), and a stereovision computing unit (316) configured to compute the depth map of the objects as a function of said first and second sets of images.

7. The agricultural system (100) of any preceding claim, wherein the spraying equipment (200) includes a first and a second fluid distribution systems (510, 520) arranged to provide to respective first and second arrays of nozzles (220, 240) a different chemical mixture at a possibly different pressure, so as to enable the spraying equipment (200) to spray two different chemical preparations in a single passage, for example simultaneously, each chemical preparation including for example herbicide, fungicide, insecticide, fertilizer or nematocide.

8. The agricultural system (100) of any preceding claim, wherein said second array of nozzles (240) comprises several segments (260) comprising each a series of nozzle, the second spray bar height control system (250) comprising one actuator (252) per segment (260) to allow fine control of the nozzles to ground distance of each segment (260) independently from the others.

9. The agricultural system (100) of any preceding claim, wherein the first spray bar (210) comprising said first array of nozzles (220) is adapted to be extended laterally, either by translation or by unfolding of one or several first spray bar extensions (550) equipped with the low-resolution nozzle array (220) and with range measurement sensors (290), so as to provide a larger working width for full spray application to achieve continuous and homogeneous spray application without low and high-resolution spot spraying (222, 242).

10. The agricultural system (100) of any preceding claim, wherein the camera module or each camera module (300) is rotatably mounted on a support of the spraying equipment (200), for example on the first spray bar (210), to provide varying tilt angle of the optical axis of the camera (310) of the camera module or each camera module (300) with reference to the ground (12) to modify the distance between an edge of the captured images of an area of a cultivated field (10) by the camera (310) and the projection on the ground (12) of said first and second spray bars (210, 215).

11. The agricultural system (100) of the preceding claim, wherein said camera module or each camera module (300) is mounted on a mast (600) extending forward from said first and second spray bars (210, 215), the mast (600) comprising a motorized rotation system (620) for controlled, accurate and repeatable rotation of the mast around an axis (610) extending perpendicularly to the travel direction of the agricultural system (100) and allowing multiple positions between two extreme positions, thus offering varying tilt angle for the camera module (300).

12. Method of operating the agricultural system (100) of any preceding claim when depending upon claim 4, using visual odometry to detect and track the tri-dimensional movement of said objects in the tri-dimensional coordinate system of the first and second arrays of nozzles (220, 240) such that the first and second nozzles array control units (280, 282) timely control said first and second array of nozzles (220, 240) according to the position of said objects in said 3D coordinate system, the visual odometry comprising the steps of:
i. capturing with the camera (310) a first image of the ground (12) and the objects on the ground;
ii. simultaneously capturing with said 3D depth sensor (314) a depth map of the ground and the objects captured in the first image;
iii. merging the first image with the depth map to obtain a 3D image;
iv. extracting on said 3D image a set of features, such as contour of an object, for features tracking;
v. repeating steps i to iv and tracking the movement of the extracted features between two consecutive 3D images as the agricultural system (100) moves along its travel direction to compute the movement of said extracted features in said 3D coordinate system.

13. Method of operating the agricultural system (100) of any claims 1 to 11, wherein the optical axis of the camera (310) of the camera module or each camera module (300) is tilted around its rotation axis (610) to set a first distance (642) and a second distance (632) smaller than the first distance, said distance being the distance between an edge of the captured image of an area of a cultivated field (10) and the projection on the ground of said first and second spray bars (210, 215), and wherein said optical axis is adjusted to
- set the first distance (642) when only low-resolution spot spraying (222) is used, thereby increasing the time for computation and consequently to allow speed increase of the agricultural system (100),
- set the second distance (632) when only high-resolution spot spraying (242) is used, wherein the speed of the agricultural system (100) is limited to allow high-precision mapping of the plants in the ground reference.

14. Method of operating the agricultural system (100) of any claims 1 to 11, when depending upon claim 4, wherein the camera module or each camera module (300) includes a first camera (310) sensitive to a first set of spectral bands, a second camera (312) sensitive to a second set of spectral bands, said 3D optical depth sensor (314) sensitive to a third set of spectral bands, one or more irradiation elements (330, 332, 334), the spectral band emission of said one or more irradiation elements (330, 332, 334), combined together, covering the entire spectral bands of the first camera (310), the second camera (312) and said 3D depth sensor (314), each irradiance element being switched on only when the pixels of the cameras (310, 312) or said 3D depth sensor (314) are integrating light using the corresponding spectrum.

15. Method of operating the agricultural system (100) of any claims 1 to 11, when depending upon claims 4 and 8, wherein the first spray bar height control system (230) regulates the distance between the first spray bar (210) and the ground (12) as a function of a combination of the information provided by said distance measurement sensors (290), by said 3D depth sensor (314), and by the second spray bar height control system (250), in particular the position, speed and/or acceleration information of the second spray bar (215) and/or each of said several segments (260) of said the second spray bar (215).

16. Method of operating the agricultural system (100) of any claims 1 to 11, when depending upon claims 4 and 8, wherein the second spray bar height control system (250) regulates the distance between the second spray bar (215) and/or each of said several segments (260) of said the second spray bar (215) with the ground (12) as a function of a combination of the information provided by said distance measurement sensors (290), by said 3D depth sensor (314), and by the first spray bar height control system (230), in particular the position, speed and/or acceleration information of the first spray bar (210).

17. Method of operating the agricultural system (100) according to any of claims 1 to 11, wherein the first and second arrays of nozzles (220, 240) are supplied either by a same liquid distribution system, or by their respective liquid distribution systems (510, 520), and wherein the first and second control units (280, 282) are operated to control each nozzle of respective first and second arrays of nozzles (220, 240) to perform on the cultivated field (10) any of the following operations:
a. performing low-resolution and high-resolution spot spraying (222, 242) simultaneously,
b. performing low-resolution spot spraying (222) while high-resolution spot spraying (242) is not performed,
c. performing high-resolution spot spraying (242) while the low-resolution spot spraying (242) is not performed,
d. performing a continuous and homogeneous spray application with the first array of nozzles (220) while the second array of nozzles (240) is not used,
e. performing a continuous and homogeneous spray application with the second array of nozzles (240) while the first array of nozzles (220) is not used,
f. performing a continuous and homogeneous spray application with the first array of nozzles (220) while the second array of nozzles (240) performs high-resolution spot spraying (242),
g. performing a continuous and homogeneous spray application with the second array of nozzles (240) while the first array of nozzles (220) performs low-resolution spot spraying (222),
h. performing a continuous and homogeneous spray application with the first and second arrays of nozzles.

## Patentansprüche

1. Landwirtschaftliches System (100) zum Besprühen eines Bereichs eines bewirtschafteten Feldes (10), einschliesslich einer Sprühausrüstung (200), wobei die Sprühausrüstung umfasst:
einen ersten und einen zweiten Sprühbalken (210, 215), welche sich im Betrieb senkrecht zur Fahrtrichtung des landwirtschaftlichen Systems (100) erstrecken, worin der erste Sprühbalken (210) eine erste Anordnung von Düsen (220) umfasst, die durch einen ersten Abstand voneinander getrennt sind, während der zweite Sprühbalken (215) eine zweite Anordnung von Düsen (240) umfasst, die durch einen zweiten Abstand voneinander getrennt sind, der kleiner als der besagte erste Abstand ist, so dass die räumliche Auflösung von Punktsprühungen (242), die durch die zweite Anordnung von Düsen (240) gesprüht werden können, höher ist als die räumliche Auflösung von Punktsprühungen (222), die durch die erste Anordnung von Düsen (220) gesprüht werden können, wenn sich der erste und der zweite Sprühbalken (210, 215) auf gleicher Höhe befinden, so dass die erste und die zweite Anordnung von Düsen (220, 240) Punktsprühen mit jeweils niedriger und hoher Auflösung (222, 242) durchführen können;
ein erstes Sprühbalkenhöhensteuersystem (230) mit mindestens einem Höhenstellglied (232) und ein zweites Sprühbalkenhöhensteuersystem (250) mit mindestens einem Höhenstellglied (252), um die Höhe des ersten und zweiten Sprühbalkens (210, 215) in Bezug auf den Boden (12) unabhängig zu steuern;
ein Kamerasystem (270) mit einem oder mehreren Kameramodulen (300), welches eine Kamera (310) umfasst, die derart angeordnet ist, um Bilder von Objekten, beispielsweise Pflanzen (14) und/oder Pflanzenteilen (16), und vom Boden (12) in Fahrtrichtung des landwirtschaftlichen Systems (100) vor dem ersten und zweiten Sprühbalken (210, 215) aufzunehmen;
eine Verarbeitungseinheit (274), die derart konfiguriert ist, um eine Bilderkennungssoftware auszuführen, um die besagten Objekte auf den erfassten Bildern zu identifizieren und eine Abbildung dieser Objekte auf dem Koordinatensystem der Sprühbalken zu erstellen,
eine oder mehrere Objektverfolgungseinheiten (276), welche derart konfiguriert sind, dass sie die Position dieser Objekte auf der besagten Abbildung kontinuierlich verfolgen,
eine Steuereinheit (280, 282) für eine erste und eine zweite Anordnung von Düsen, welche derart konfiguriert ist, um jede Düse der jeweiligen ersten und zweiten Anordnung von Düsen (220, 240) zu steuern, um die Düsen der besagten ersten und zweiten Anordnung von Düsen (220, 240) selektiv zu steuern, um ein Punktsprühen (222, 242) mit niedriger und/oder hoher Auflösung auf verschiedenen Objekten als Funktion der Position dieser Objekte auf der besagten Abbildung in Bezug auf die Position der ersten und zweiten Sprühstangen (210, 215) durchzuführen.

2. Landwirtschaftliches System (100) gemäss Anspruch 1, worin das Sprühbalkenhöhensteuersystem (230) ein oder mehrere primäre Höhenstellglieder (232) umfasst, welche dazu angeordnet sind, die Höhe sowohl des ersten als auch des zweiten Sprühbalkens (210, 215) in Bezug auf den Boden (12) zu steuern, und ein oder mehrere sekundäre Höhenstellglieder (252), welche dazu angeordnet sind, einen der ersten und zweiten Sprühbalken (210, 215) in Bezug auf den anderen der ersten und zweiten Sprühbalken (210, 215) zu bewegen.

3. Landwirtschaftliches System (100) des vorhergehenden Anspruchs, worin die Sprühausrüstung (200) Abstandsmesssensoren (290) umfasst, welche derart angeordnet sind, um den Abstand vom ersten und/oder zweiten Sprühbalken (210, 215) zur Bodenoberfläche (12) zu messen, um eine geschätzte Objektebene (326) zu bestimmen, wobei die besagten Abstandsmesssensoren (290) beispielsweise entlang des ersten und zweiten Sprühbalkens (210, 215) montiert sind, und worin die besagten Abstandsmesssensoren (290) derart angeordnet sind, um Abstandsinformationen an die Steuereinheit (280, 282) für die erste und zweite Anordnung von Düsen (280, 282) zu senden, um die Höhe des besagten ersten und zweiten Sprühbalkens (210, 215) zum Boden als Funktion der Abstandsinformationen zu regulieren.

4. Landwirtschaftliches System (100) des vorhergehenden Anspruchs, worin das Kameramodul oder jedes Kameramodul (300) zudem einen 3D-Tiefensensor (314) umfasst, welcher derart angeordnet ist, um den Abstand (320) zwischen jedem Punkt der von der Kamera (310) erfassten Objekte und dem besagten 3D-Tiefensensor (314) zu messen, um eine Tiefenkarte zu erzeugen, auf welcher die besagten Objekte im dreidimensionalen Koordinatensystem der ersten und zweiten Sprühbalken (210, 215) abgebildet sind, zur Korrektur von etwaigen horizontalen Abbildungsfehlern (322), die durch den Höhenunterschied (324) zwischen der besagten geschätzten Objektebene (326) und den tatsächlichen Objektpositionen verursacht werden, um die Sprühgenauigkeit zu verbessern.

5. Landwirtschaftliches System (100) des vorhergehenden Anspruchs, worin der besagte 3D-Tiefensensor (314) ein Laserscansystem mit Flugzeit (LIDAR) oder Triangulation, ein Stereovisionssystem, eine Flugzeitkamera oder eine Tiefenkamera mit strukturiertem Licht ist.

6. Landwirtschaftliches System (100) gemäss Anspruch 4, worin das Kameramodul oder jedes Kameramodul (300) mindestens zwei Kameras umfasst, welche derart angeordnet sind, um gleichzeitig jeweils einen ersten und einen zweiten Satz von Bildern des Bodens (12) vor dem ersten und zweiten Sprühbalken (210, 215) aufzunehmen, und eine Stereovisions-Recheneinheit (316), welche derart konfiguriert ist, um die Tiefenkarte der Objekte als Funktion des besagten ersten und zweiten Satzes von Bildern zu berechnen.

7. Landwirtschaftliches System (100) gemäss irgendeinem der vorhergehenden Ansprüche, worin die Sprühausrüstung (200) ein erstes und ein zweites Flüssigkeitsverteilungssystem (510, 520) umfasst, welche derart angeordnet sind, um einer ersten bzw. zweiten Anordnung von Düsen (220, 240) ein unterschiedliches Chemikaliengemisch bei möglicherweise unterschiedlichem Druck zuzuführen, sodass die Sprühausrüstung (200) in einem einzigen Durchgang, beispielsweise gleichzeitig, zwei unterschiedliche chemische Präparate versprühen kann, wobei jedes chemische Präparat beispielsweise ein Herbizid, ein Fungizid, ein Insektizid, ein Düngemittel oder ein Nematozid enthält.

8. Landwirtschaftliches System (100) gemäss irgendeinem der vorhergehenden Ansprüche, wobei die besagte zweite Anordnung von Düsen (240) mehrere Segmente (260) mit jeweils einer Düsenreihe umfasst, wobei das zweite Sprühbalkenhöhensteuersystem (250) ein Stellglied (252) pro Segment (260) umfasst, um eine Feinsteuerung des Abstands der Düsen zum Boden jedes Segments (260) unabhängig von den anderen zu ermöglichen.

9. Landwirtschaftliches System (100) gemäss irgendeinem der vorhergehenden Ansprüche, worin der erste Sprühbalken (210), der die besagte erste Anordnung von Düsen (220) umfasst, seitlich ausgefahren werden kann, entweder durch Translation oder durch Ausklappen einer oder mehrerer erster Sprühbalkenverlängerungen (550), die mit der Anordnung von Düsen (220) mit niedriger Auflösung und mit Entfernungsmesssensoren (290) ausgestattet sind, um eine grössere Arbeitsbreite für die vollständige Sprühanwendung bereitzustellen und eine kontinuierliche und homogene Sprühanwendung ohne Punktsprühen mit niedriger oder hoher Auflösung (222, 242) zu erreichen.

10. Landwirtschaftliches System (100) gemäss irgendeinem der vorhergehenden Ansprüche, worin das Kameramodul oder jedes Kameramodul (300) drehbar auf einer Halterung der Sprühausrüstung (200) montiert ist, beispielsweise auf dem ersten Sprühbalken (210), um einen variierenden Neigungswinkel der optischen Achse der Kamera (310) des Kameramoduls oder jedes Kameramoduls (300) in Bezug auf den Boden (12) bereitzustellen und so den Abstand zwischen einer Kante der von der Kamera (310) aufgenommenen Bilder eines Bereichs eines bewirtschafteten Felds (10) und der Projektion des ersten und zweiten Sprühbalkens (210, 215) auf dem Boden (12) zu verändern.

11. Landwirtschaftliches System (100) des vorhergehenden Anspruchs, worin das besagte Kameramodul oder jedes Kameramodul (300) auf einem Mast (600) montiert ist, der sich von den besagten ersten und zweiten Sprühbalken (210, 215) nach vorne erstreckt, wobei der Mast (600) ein motorisiertes Rotationssystem (620) zur kontrollierten, genauen und wiederholbaren Rotation des Mastes um eine Achse (610) umfasst, die senkrecht zur Fahrtrichtung des landwirtschaftlichen Systems (100) verläuft und mehrere Positionen zwischen zwei Extrempositionen ermöglicht, wodurch sich variierende Neigungswinkel für das Kameramodul (300) ergeben.

12. Verfahren zum Betreiben des landwirtschaftlichen Systems (100) gemäss irgendeinem der vorhergehenden Ansprüche, wenn auf Anspruch 4 beruhend, unter Verwendung von visueller Odometrie, um die dreidimensionale Bewegung der besagten Objekte im dreidimensionalen Koordinatensystem der ersten und zweiten Anordnung von Düsen (220, 240) zu erfassen und zu verfolgen, so dass die Steuereinheiten (280, 282) der ersten und zweiten Anordnung von Düsen die besagte erste und zweite Anordnung von Düsen (220, 240) entsprechend der Position der besagten Objekte im besagten 3D-Koordinatensystem zeitnahe steuern, wobei die visuelle Odometrie die folgenden Schritte umfasst:
i. Aufnehmen eines ersten Bildes des Bodens (12) und der Objekte auf dem Boden mit der Kamera (310);
ii. gleichzeitiges Aufnehmen einer Tiefenkarte des Bodens und der im ersten Bild erfassten Objekte mit einem 3D-Tiefensensor (314);
iii. Zusammenführen des ersten Bildes mit der Tiefenkarte, um ein 3D-Bild zu erhalten;
iv. Extrahieren eines Satzes von Merkmalen, wie etwa der Kontur eines Objekts, aus dem 3D-Bild zur Merkmalsverfolgung;
v. Wiederholen der Schritte i bis iv und Verfolgen der Bewegung der extrahierten Merkmale zwischen zwei aufeinanderfolgenden 3D-Bildern, während sich das landwirtschaftliche System (100) entlang seiner Fahrtrichtung bewegt, um die Bewegung der besagten extrahierten Merkmale im besagten 3D-Koordinatensystem zu berechnen.

13. Verfahren zum Betreiben des landwirtschaftlichen Systems (100) gemäss irgendeinem der Ansprüche 1 bis 11, worin die optische Achse der Kamera (310) des Kameramoduls oder jedes Kameramoduls (300) um seine Drehachse (610) gekippt wird, um einen ersten Abstand (642) und einen zweiten Abstand (632), der kleiner als der erste Abstand ist, einzustellen, wobei der besagte Abstand der Abstand zwischen einem Rand des aufgenommenen Bildes eines Bereichs eines bewirtschafteten Feldes (10) und der Projektion auf dem Boden der besagten ersten und zweiten Sprühbalken (210, 215) ist, und worin die optische Achse dazu eingestellt wird:
- Einstellen der ersten Distanz (642), wenn nur Spotsprühen (222) mit niedriger Auflösung verwendet wird, wodurch die Rechenzeit erhöht wird und folglich eine Geschwindigkeitssteigerung des landwirtschaftlichen Systems (100) ermöglicht wird,
- Einstellen der zweiten Distanz (632), wenn nur Spotsprühen (242) mit hoher Auflösung verwendet wird, worin die Geschwindigkeit des landwirtschaftlichen Systems (100) begrenzt wird, um eine hochpräzise Abbildung der Pflanzen im Bodenbezug zu ermöglichen.

14. Verfahren zum Betreiben des landwirtschaftlichen Systems (100) gemäss einem der Ansprüche 1 bis 11, wenn auf Anspruch 4 beruhend, worin das Kameramodul oder jedes Kameramodul (300) eine erste Kamera (310) umfasst, die für einen ersten Satz von Spektralbändern empfindlich ist, eine zweite Kamera (312), die für einen zweiten Satz von Spektralbändern empfindlich ist, den besagten optischen 3D-Tiefensensor (314), der für einen dritten Satz von Spektralbändern empfindlich ist, ein oder mehreren Bestrahlungselementen (330, 332, 334), wobei die Spektralbandemission des einen oder der mehreren Bestrahlungselemente (330, 332, 334) zusammen die gesamten Spektralbänder der ersten Kamera (310), der zweiten Kamera (312) und des besagten 3D-Tiefensensors (314) abdeckt, wobei jedes Bestrahlungselement nur eingeschaltet wird, wenn die Pixel der Kameras (310, 312) oder des besagten 3D-Tiefensensors (314) Licht unter Verwendung des entsprechenden Spektrums integrieren.

15. Verfahren zum Betreiben des landwirtschaftlichen Systems (100) gemäss irgendeinem der Ansprüche 1 bis 11, wenn auf Anspruch 4 und 8 beruhend, worin das erste Sprühbalkenhöhensteuersystem (230) den Abstand zwischen dem ersten Sprühbalken (210) und dem Boden (12) als Funktion einer Kombination der von den besagten Abstandsmesssensoren (290), den besagten3D-Tiefensensoren (314) und dem zweiten Sprühbalkenhöhensteuersystem (250) bereitgestellten Informationen regelt, insbesondere der Positions-, Geschwindigkeits- und/oder Beschleunigungsinformationen des zweiten Sprühbalkens (215) und/oder jedes von mehreren Segmenten (260) des besagten zweiten Sprühbalkens (215).

16. Verfahren zum Betreiben des landwirtschaftlichen Systems (100) gemäss irgend einem der Ansprüche 1 bis 11, wenn auf Anspruch 4 und 8 beruhend, wobei das zweite Sprühbalkenhöhensteuersystem (250) den Abstand zwischen dem zweiten Sprühbalken (215) und/oder jedem von mehreren Segmenten (260) des besagten zweiten Sprühbalkens (215) und dem Boden (12) als Funktion einer Kombination der von den besagten Abstandsmesssensoren (290), den besagten 3D-Tiefensensoren (314) und dem ersten Sprühbalkenhöhensteuersystem (230) bereitgestellten Informationen regelt, insbesondere der Positions-, Geschwindigkeits-und/oder Beschleunigungsinformationen des ersten Sprühbalkens (210).

17. Verfahren zum Betreiben des landwirtschaftlichen Systems (100) gemäss irgendeinem der Ansprüche 1 bis 11, worin die erste und die zweite Anordnung von Düsen (220, 240) entweder durch ein gleiches Flüssigkeitsverteilungssystem oder durch ihre jeweiligen Flüssigkeitsverteilungssysteme (510, 520) versorgt werden, und worin die erste und die zweite Steuereinheit (280, 282) betrieben werden, um jede Düse der jeweiligen ersten und zweiten Anordnung von Düsen (220, 240), um auf dem bewirtschafteten Feld (10) folgende Vorgänge auszuführen:
a. Gleichzeitiges Ausführen von Punktsprühen mit jeweils niedriger und hoher Auflösung (222, 242),
b. Ausführen von Punktsprühen mit niedriger Auflösung (222), während kein Punktsprühen mit hoher Auflösung (242) ausgeführt wird,
c. Ausführen von Punktsprühen mit hoher Auflösung (242), während das Punktsprühen mit niedriger Auflösung (242) nicht ausgeführt wird,
d. Ausführen eines kontinuierlichen und homogenen Sprühauftrags mit der ersten Anordnung von Düsen (220), während die zweite Anordnung von Düsen (240) nicht verwendet wird,
e. Ausführen eines kontinuierlichen und homogenen Sprühauftrags mit der zweiten Anordnung von Düsen (240), während die erste Anordnung von Düsen (220) nicht verwendet wird,
f. Ausführen eines kontinuierlichen und homogenen Sprühauftrags mit der ersten Anordnung von Düsen (220), während die zweite Anordnung von Düsen (240) ein Punktsprühen mit hoher Auflösung (242) ausführt,
g. Durchführen eines kontinuierlichen und homogenen Sprühauftrags mit der zweiten Anordnung von Düsen (240), während die erste Anordnung von Düsen (220) ein Punktsprühen (222) mit niedriger Auflösung durchführt,
h. Durchführen eines kontinuierlichen und homogenen Sprühauftrags mit der ersten und der zweiten Anordnung von Düsen.

## Revendications

1. Système agricole (100) pour pulvériser une zone d'un champ cultivé (10), comprenant un équipement de pulvérisation (200), l'équipement de pulvérisation comprenant :
une première et une seconde rampe de pulvérisation (210, 215) s'étendant perpendiculairement à la direction de déplacement du système agricole (100) en fonctionnement, la première rampe de pulvérisation (210) comprenant un première rangée de buses (220) espacées les unes des autres d'une première distance, tandis que la seconde rampe de pulvérisation (215) comprend une seconde rangée de buses (240) espacées les unes des autres d'une seconde distance plus petite que ladite première distance, de sorte que la résolution spatiale des pulvérisations localisées (242) pouvant être effectuées par la seconde rangée de buses (240) est plus élevée que la résolution spatiale des pulvérisations localisées (222) pouvant être effectuées par la première rangée de buses (220), lorsque les première et seconde rampes de pulvérisation (210, 215) sont situées à la même hauteur, de manière que les première et seconde rangées de buses (220, 240) puissent réaliser respectivement des pulvérisations localisées en basse et haute résolution (222, 242) ;
un premier système de contrôle (230) de la hauteur de la première rampe de pulvérisation comprenant au moins un actionneur (232) de réglage en hauteur, et un second système de contrôle (250) de la hauteur de la seconde rampe de pulvérisation comprenant au moins un actionneur (252) de réglage en hauteur (252), afin de contrôler indépendamment la hauteur des première et seconde rampes de pulvérisation (210, 215) par rapport au sol (12) ;
un système de caméras (270) comprenant un ou plusieurs modules de caméra (300) comprenant une caméra (310) agencée pour capturer des images d'objets, par exemple des plantes (14) et/ou des parties de plantes (16), ainsi que du sol (12), en amont des première et seconde rampes de pulvérisation (210, 215) dans la direction de déplacement du système agricole (100) ;
une unité de traitement (274) configurée pour exécuter un logiciel de reconnaissance d'images afin d'identifier lesdits objets sur les images acquises et de générer une cartographie de ces objets dans le système de coordonnées des rampes de pulvérisation ;
une ou plusieurs unités de suivi d'objets (276) configurées pour suivre en continu la position de ces objets sur ladite cartographie ;
une première et une seconde unité de contrôle (280, 282) configurées pour contrôler chaque buse des première et seconde rangées de buses (220, 240) respectivement, de manière à contrôler sélectivement les buses desdites première et seconde rangées de buses (220, 240) pour effectuer des pulvérisations localisées (222, 242) en basse et/ou haute résolution sur différents objets, en fonction de la position de ces objets sur ladite cartographie par rapport à la position des première et seconde rampes de pulvérisation (210, 215).

2. Le système agricole (100) selon la revendication 1, dans lequel le système de contrôle (230) comprend un ou plusieurs actionneurs principaux (230) de réglage en hauteur agencés pour contrôler la hauteur des première et seconde rampes de pulvérisation (210, 215) par rapport au sol (12), et un ou plusieurs actionneurs secondaires (252) de réglage en hauteur agencés pour déplacer l'une desdites première et seconde rampes de pulvérisation (210, 215) par rapport à l'autre.

3. Le système agricole (100) selon la revendication précédente, dans lequel l'équipement de pulvérisation (200) comprend des capteurs de mesure de distance (290) agencés pour mesurer la distance entre la première et/ou la seconde rampe de pulvérisation (210, 215) et la surface du sol (12) afin de déterminer un plan estimé des objets (326), lesdits capteurs de mesure de distance (290) étant, par exemple, montés le long des première et seconde rampes de pulvérisation (210, 215), et dans lequel lesdits capteurs de mesure de distance (290) sont agencés pour transmettre des informations de distance aux première et seconde unités de contrôle (280, 282) des première et seconde rangées de buses afin de réguler la hauteur desdites première et seconde rampes de pulvérisation (210, 215) par rapport au sol en fonction desdites informations de distance.

4. Le système agricole (100) selon la revendication précédente, dans lequel le module de caméra ou chaque module de caméra (300) comprend en outre un capteur de profondeur 3D (314) agencé pour mesurer la distance (320) entre n'importe quel point des objets capturés par la caméra (310) et ledit capteur de profondeur 3D (314), afin de générer une carte de profondeur sur laquelle sont cartographiés lesdits objets dans le système de coordonnées tridimensionnel des première et seconde rampes de pulvérisation (210, 215), pour corriger toute erreur de cartographie horizontale (322) causée par la différence de hauteur (324) entre le plan estimé des objets (326) et les positions réelles des objets, de sorte à améliorer la précision de la pulvérisation.

5. Le système agricole (100) selon la revendication précédente, dans lequel ledit capteur de profondeur 3D (314) est un système de balayage laser à temps de vol (LIDAR) ou à triangulation, un système de stéréovision, une caméra à temps de vol ou une caméra de profondeur à lumière structurée.

6. Le système agricole (100) selon la revendication 4, dans lequel le module de caméra ou chaque module de caméra (300) comprend au moins deux caméras agencées pour acquérir simultanément respectivement un premier et un second ensemble d'images du sol (12) en amont des première et seconde rampes de pulvérisation (210, 215), et une unité de calcul stéréovision (316) configurée pour calculer la carte de profondeur des objets en fonction desdits premier et second ensembles d'images.

7. Le système agricole (100) selon l'une quelconque des revendications précédentes, dans lequel l'équipement de pulvérisation (200) comprend un premier et un second systèmes de distribution de fluide (510, 520) agencés pour fournir respectivement aux première et seconde rangées de buses (220, 240) un mélange chimique différent, éventuellement à une pression différente, de manière à permettre à l'équipement de pulvérisation (200) de pulvériser deux préparations chimiques différentes en un seul passage, par exemple simultanément, chaque préparation chimique comprenant par exemple un herbicide, un fongicide, un insecticide, un fertilisant ou un nématicide.

8. Le système agricole (100) selon l'une quelconque des revendications précédentes, dans lequel ladite seconde rangée de buses (240) comprend plusieurs segments (260), chacun comprenant une série de buses, le second système de contrôle (250) de la hauteur de la seconde rampe de pulvérisation comprenant un actionneur (252) par segment (260) afin de permettre un réglage précis de la distance entre les buses et le sol pour chaque segment (260), indépendamment des autres.

9. Le système agricole (100) selon l'une quelconque des revendications précédentes, dans lequel la première rampe de pulvérisation (210) comprenant ladite première rangée de buses (220) est adaptée pour être étendue latéralement, soit par translation, soit par déploiement d'une ou plusieurs extensions (550) équipées de la rangée de buses (220) à basse résolution et de capteurs de mesure de distance (290), de manière à offrir une largeur de travail accrue pour une application de pulvérisation uniforme et sans interruption sur toute la surface, sans recours à la pulvérisation localisée en basse ou haute résolution (222, 242).

10. Le système agricole (100) selon l'une quelconque des revendications précédentes, dans lequel le module de caméra ou chaque module de caméra (300) est monté de manière rotative sur un support de l'équipement de pulvérisation (200), par exemple sur la première rampe de pulvérisation (210), afin d'offrir un angle d'inclinaison variable de l'axe optique de la caméra (310) du module de caméra ou de chaque module de caméra (300) par rapport au sol (12), pour modifier la distance entre un bord des images capturées d'une zone du champ cultivé (10) par la caméra (310) et la projection au sol (12) desdites première et seconde rampes de pulvérisation (210, 215).

11. Le système agricole (100) selon la revendication précédente, dans lequel ledit module de caméra ou chaque module de caméra (300) est monté sur un mât (600) s'étendant vers l'avant à partir desdites première et seconde rampes de pulvérisation (210, 215), le mât (600) comprenant un système de rotation motorisé (620) permettant une rotation contrôlée, précise et répétable du mât autour d'un axe (610) s'étendant perpendiculairement à la direction de déplacement du système agricole (100) et autorisant plusieurs positions entre deux positions extrêmes, offrant ainsi un angle d'inclinaison variable pour le module de caméra (300).

12. Méthode de mise en œuvre du système agricole (100) selon l'une quelconque des revendications précédentes lorsqu'elle dépend de la revendication 4, utilisant une odométrie visuelle pour détecter et suivre le mouvement tridimensionnel desdits objets dans le système de coordonnées tridimensionnel des première et seconde rangées de buses (220, 240), de sorte que les première et seconde unités de contrôle (220, 280) commandent en temps opportun lesdites première et seconde rangées de buses (220, 240) en fonction de la position desdits objets dans ledit système de coordonnées 3D, l'odométrie visuelle comprenant les étapes suivantes :
i.capturer à l'aide de la caméra (310) une première image du sol (12) et des objets présents sur le sol ;
ii.capturer simultanément, à l'aide dudit capteur de profondeur 3D (314), une carte de profondeur du sol et des objets figurant dans la première image ;
iii.fusionner la première image avec la carte de profondeur afin d'obtenir une image 3D ;
iv.extraire, sur ladite image 3D, un ensemble de caractéristiques, telles que les contours d'un objet, pour permettre le suivi de caractéristiques ;
v.répéter les étapes i à iv et suivre le déplacement des caractéristiques extraites entre deux images 3D successives, à mesure que le système agricole (100) avance dans sa direction de déplacement, afin de calculer le mouvement desdites caractéristiques extraites dans ledit système de coordonnées 3D.

13. Méthode de mise en œuvre du système agricole (100) selon l'une quelconque des revendications 1 à 11, dans laquelle l'axe optique de la caméra (310) du module de caméra ou de chaque module de caméra (300) est incliné autour de son axe de rotation (610) de manière à définir une première distance (642) et une seconde distance (632) inférieure à la première distance, ladite distance étant la distance entre un bord de l'image capturée d'une zone du champ cultivé (10) et la projection au sol desdites première et seconde rampes de pulvérisation (210, 215), et dans laquelle ledit axe optique est ajusté de façon à :
- définir la première distance (642) lorsque seule la pulvérisation localisée en basse résolution (222) est utilisée, ce qui augmente le temps de calcul et permet ainsi une augmentation de la vitesse de déplacement du système agricole (100),
- définir la seconde distance (632) lorsque seule la pulvérisation localisée en haute résolution (242) est utilisée, la vitesse du système agricole (100) étant limitée afin de permettre une cartographie de haute précision des plantes dans le repère défini par le sol.

14. Méthode de mise en œuvre du système agricole (100) selon l'une quelconque des revendications 1 à 11, lorsqu'elle dépend de la revendication 4, dans laquelle le module de caméra ou chaque module de caméra (300) comprend une première caméra (310) sensible à un premier ensemble de bandes spectrales, une seconde caméra (312) sensible à un second ensemble de bandes spectrales, ledit capteur optique de profondeur 3D (314) étant sensible à un troisième ensemble de bandes spectrales, ainsi qu'un ou plusieurs éléments d'irradiation (330, 332, 334), l'émission spectrale dudit ou desdits éléments d'irradiation (330, 332, 334), prise dans son ensemble, couvrant l'intégralité des bandes spectrales des première caméra (310), seconde caméra (312) et dudit capteur de profondeur 3D (314), chaque élément d'irradiation étant activé uniquement lorsque les pixels des caméras (310, 312) ou dudit capteur de profondeur 3D (314) intègrent la lumière dans le spectre correspondant.

15. Méthode de mise en œuvre du système agricole (100) selon l'une quelconque des revendications 1 à 11, lorsqu'elle dépend des revendications 4 et 8, dans laquelle le premier système de contrôle (230) règle la distance entre la première rampe de pulvérisation (210) et le sol (12) en fonction d'une combinaison des informations fournies par lesdits capteurs de mesure de distance (290), par ledit capteur de profondeur 3D (314), et par le second système de contrôle (250), en particulier les informations relatives à la position, à la vitesse et/ou à l'accélération de la seconde rampe de pulvérisation (215) et/ou de chacun desdits segments (260) de ladite seconde rampe de pulvérisation (215).

16. Méthode de mise en œuvre du système agricole (100) selon l'une quelconque des revendications 1 à 11, lorsqu'elle dépend des revendications 4 et 8, dans laquelle le second système de contrôle (250) règle la distance entre la seconde barre de pulvérisation (215) et/ou chacun des segments (260) de ladite seconde barre de pulvérisation (215) et le sol (12), en fonction d'une combinaison des informations fournies par lesdits capteurs de mesure de distance (290), par ledit capteur de profondeur 3D (314), et par le système le premier système de contrôle (230), en particulier les informations relatives à la position, à la vitesse et/ou à l'accélération de la première rampe de pulvérisation (210).

17. Méthode de mise en œuvre du système agricole (100) selon l'une quelconque des revendications 1 à 11, dans laquelle les première et seconde rangées de buses (220, 240) sont alimentées soit par un même système de distribution de liquide, soit par leurs systèmes respectifs de distribution de liquide (510, 520), et dans laquelle les première et seconde unités de contrôle (280, 282) sont pilotées de manière à commander chaque buse des première et seconde rangées de buses respectives (220, 240) pour effectuer, sur le champ cultivé (10), l'une quelconque des opérations suivantes :
a. effectuer simultanément une pulvérisation localisée à basse résolution (222) et une pulvérisation localisée à haute résolution (242),
b. effectuer une pulvérisation localisée à basse résolution (222) tandis qu'aucune pulvérisation localisée à haute résolution (242) n'est effectuée,
c. effectuer une pulvérisation localisée à haute résolution (242) tandis qu'aucune pulvérisation localisée à basse résolution (222) n'est effectuée,
d. effectuer une application continue et homogène avec la première rangées de buses (220) tandis que la seconde rangée de buses (240) n'est pas utilisée,
e. effectuer une application continue et homogène avec la seconde rangée de buses (240) tandis que la première rangée de buses (220) n'est pas utilisée,
f. effectuer une application continue et homogène avec la première rangée de buses (220) tandis que la seconde rangée de buses (240) effectue une pulvérisation localisée à haute résolution (242),
g. effectuer une application continue et homogène avec la seconde rangée de buses (240) tandis que la première rangée de buses (220) effectue une pulvérisation localisée à basse résolution (222),
h. effectuer une application continue et homogène avec les première et seconde rangées de buses.
